# EUROPEAN PATENT SPECIFICATION

(11) **EP 0 414 364 B1**
(45) Date of publication and mention of the grant of the patent: **22.02.1995**
(21) Application number: 90307572.9
(22) Date of filing: 11.07.1990
(51) Int. Cl.: G01F 25/00, A01M 7/00

(54) **Calibration of fluid delivery equipment**
Kalibrierung einer Flüssigkeitsverteileinrichtung
Etalonnage d'un équipement de distribution de fluide

(30) Priority: 21.08.1989 EP 89308454; 20.02.1990 GB 9003775
(43) Date of publication of application: 27.02.1991
(73) Proprietor: NOMIX-CHIPMAN LIMITED, Staple Hill, Bristol BS16 4PS (GB)
(72) Inventor: Gill, David Charles, Bristol (GB)
(74) Representative: Cheyne, John Robert Alexander Mackenzie

(56) References cited:
- EP-A- 0 256 744
- EP-A- 0 297 803
- EP-A- 0 323 205
- US-A- 4 389 886
- US-A- 4 409 845

## Description

This invention relates to the calibration of fluid delivery equipment, and is particularly, although not exclusively, concerned with the calibration of equipment for delivering herbicides.

Different herbicide formulations have different properties, and in particular may have different viscosities. As a result, where herbicide is fed through a restrictor to a distribution element for distribution over the ground, the flow rate through the restrictor will depend upon the formulation which is used. In addition, since the actual flow rate is sensitive to the dimensions of the equipment, the flow rate will tend to vary from one piece of equipment to another, even when they are set to give the same nominal flow rate.

Modern herbicides are highly effective, and very small quantities of them are required in order to produce the desired effect. Thus, for maximum effectiveness and efficiency, the rate of delivery of the herbicide must be controlled very accurately. In general, before a piece of fluid delivery equipment is used with a particular herbicide formulation, a calibration test is carried out. During this test, the nominal flow rate of the equipment is set to the desired flow rate as indicated on a manually operated valve. Then, the equipment is operated for a given period of time, as measured by the operator, and the amount of fluid delivered into a calibration vessel during that period of time is used to calculate the actual flow rate, which is then compared with the desired flow rate. The nominal flow rate set can then be altered if required. A calibration device for use in this method is disclosed in EP-A-0297803.

However, this method has the disadvantage that the duration of the calibration test is determined entirely by the operator. One disadvantage of this is that the operator is likely to choose a duration, such as one minute, which allows easy calculation of the flow rate following the test. However, such a duration may be unsuitable for other reasons. For example, the amount of fluid which flows in this time period may be too small to be measured accurately or too large to be contained in the calibration vessel. A second disadvantage is that the time must be measured by the operator using a stop watch. This means that, at the beginning of the test, the operator must operate the stop watch and the trigger on the handset simultaneously, and must concentrate sufficiently to operate the trigger on the handset to stop the fluid flow at the correct time at the end of the test.

A further disadvantage is that the operator must correlate the volume of fluid flowing into the calibration vessel in the predetermined time with a desired application rate of the herbicide over the ground. For this, he needs to take into account both the spray width and the travel speed of the equipment during spraying. This places a considerable burden on the operator, and creates a possible source of error.

EP-A-0256744 discloses fluid delivery equipment to which, during a fluid delivery mode of operation, an electrical signal may be supplied to indicate a desired walking speed of the operator of the equipment. In the apparatus disclosed, there is provided an output means for supplying audible tones to the operator at a constant frequency corresponding to the pacing frequency required in order to achieve the desired walking speed.

US-A-4389886 discloses a calibrating unit for medical devices, the unit having means for counting the number of drops of liquid which pass a sensor in a manually set measurement interval. At the end of the measurement interval the calibrating unit automatically stops the count.

EP-A-0323205 discloses an apparatus for delivering a liquid, and discloses calibration tests being carried out over predetermined distances or for predetermined time periods or for time periods which result in the delivery of predetermined quantities of liquid.

The present invention seeks to provide apparatus which allows more accurate and reliable calibration to be carried out by removing the necessity for the operator to time the test.

According to the present invention, there is provided fluid delivery equipment being selectively operable in fluid delivery and calibration modes, the equipment including electronic circuitry, means supplying to a first input an input of said electronic circuitry signal indicative of the desired width of a strip of land to which fluid is to be delivered, means supplying to a second input of said electronic circuitry a signal indicating that fluid has been caused to flow in the equipment, and means enabling the setting of the circuitry into a calibration mode of operation wherein an output signal arranged either (a) to operate an alarm to indicate to an operator to terminate fluid delivery or (b) to automatically terminate delivery, is provided a predetermined time after a signal is received at the second input, and wherein the predetermined time is calculated on the basis of the input signal received at the first input.

This output termination signal may take the form of an audible warning to the operator to indicate that the flow of fluid should be stopped, or may take the form of an electrical signal which automatically cuts off the fluid flow.

In preferred embodiments of the invention, the equipment comprises a handset, incorporating a manually operable trigger, and a distribution head, connected to the handset by a tube through which fluid can flow and incorporating a manually operable variable flow restrictor.

A further problem which occurs frequently during the use of conventional hand-held spraying equipment to spray a strip of land is that the strip of land contains obstacles such as trees; the known equipment provides no assistance for the operator attempting to ensure that the ground around the base of such an obstacle receives the correct dose of herbicide.

Preferably, therefore, fluid delivery according to the present invention further comprises a handset, adapted for connection to a supply of the fluid and being connected to a distribution head by a tube through which the fluid can flow; the equipment being selectively operable in first and second fluid delivery modes and a calibration mode, wherein in the first operation mode, fluid is caused or allowed to flow to the distribution head for as long as the trigger is depressed and wherein, in the second operation mode, fluid is caused or allowed to flow to the distribution head for a predetermined operation time when the trigger is depressed and, at the end of the predetermined operation time, a control signal is output.

For a better understanding of the present invention, and to show how the same may be brought into effect, reference will now be made, by way of example, to the accompanying drawings, in which:-
Figure 1 shows fluid delivery equipment according to the present invention; and
Figure 2 is a block schematic diagram of the control circuitry for the equipment shown in Figure 1.

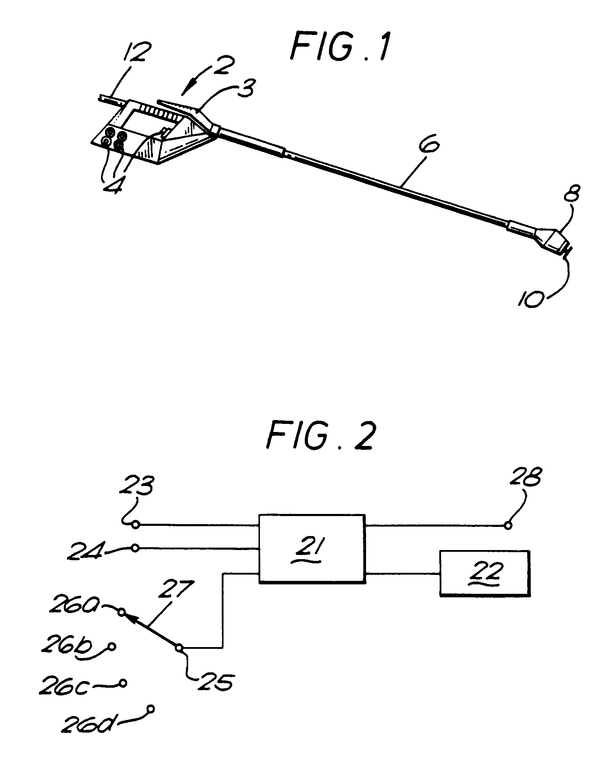

The equipment shown in Figure 1 comprises a hand-held herbicide delivery device, or lance, which is intended to be carried by an operator who walks over the ground which is to be treated. The lance comprises a handset 2 which is provided with a trigger 3 and appropriate operating controls 4. A rigid support member in the form of a tube 6 extends from the handset 2 and carries a delivery head 8. The head 8 accommodates an electric motor for driving a spinning disc 10. The head 8 also accommodates a metering valve mechanism (not shown) for controlling the rate of flow of herbicide to the disc 10. A tube 12 extends from the handset 2 for connection to a herbicide container.

In use of the equipment shown in Figure 1, actuation of the trigger 3 opens a valve (not shown) in the handset, to allow herbicide to flow from the tube 12 to the delivery head 8. Also, a microswitch (not shown) is operated by actuation of the trigger 3 to supply electrical power to the electric motor in the head 8. Herbicide thus flows through the tube 12, the handset 2 and the tube 6 to the head 8. From the head 8 the herbicide flows via the metering valve mechanism at a controlled rate to the spinning disc 10, which discharges the herbicide by centrifugal force to form droplets which fall on to the ground. As disclosed in EP-A-0110713, the speed at which the disc 10 spins, and hence the width of the strip of land which can be treated, is variable. The operator uses an appropriate one of the controls 4 in order to set the desired spray width, and the disc speed is then controlled as required.

Located within the equipment is electronic circuitry as shown schematically in Figure 2, provided in order to allow the desired functions. A control circuit 21 is located in the handset 2 and is connected to an electric motor 22 which is located in the head 8 and is connected to the disc 10 in order to be able to cause it to rotate. Connected to the control circuit 21 are inputs 23, 24 and another either input 25 which is connected selectively by means of a switch 27 to inputs 26a, 26b, 26c, 26d. Also connected to the control circuit 21 is an output 28.

The input 23 is provided with the input signal from one of the controls 4, with which the operator sets the desired width which is to be sprayed. The input 24 is provided with a signal from a sensor, such as the microswitch controlling the motor in the head 8, which is positioned such that it can detect whenever the trigger 3 is depressed. The third input 25 is connected to a rotary switch 27, which has a plurality of selectable second positions corresponding to the inputs 26a, 26b, 26c, 26d. When the switch 27 is set to the first of these positions 26a, the equipment is set in a calibration mode, and an appropriate signal is sent to the circuit 21. Each of the second positions 26b, 26c, 26d corresponds to a desired pedestrian speed set by the operator and, when the switch 27 is set to one of these positions, the equipment is set in a fluid delivery mode and a signal corresponding to the desired pedestrian speed is sent to the control circuit 21. The output 28 is adapted to be connected to an audible tone generating device, and signals are sent from the control circuit 21 to the output 28 when it is desired to provide an audible tone as described below.

When first using the equipment, the operator uses the appropriate one of the controls 4 to indicate the desired width of land which he is going to wish to spray. A corresponding input signal is sent to the control circuit 21. Then, the operator manually adjusts the valve which is located in the head 8 and which restricts the flow of fluid. A calibration test is then carried out, with a calibration vessel being placed over the head 8, for example as described in EP-A-0297803. The rotary switch 27 is set by the operator to the first position 26a in order to set the equipment into calibration mode. The trigger 3 is then depressed in order to allow fluid to flow from the container along the tube 12 and tube 6 to the head 8. When a signal is supplied from the input 24 to the control circuit 21, indicating that the trigger has been depressed, a timer circuit within the control circuit 21 begins to count down a predetermined time period which is set for the duration of the calibration test. If this predetermined time period is too large or too small, problems can arise, since the quantity of fluid which flows may be either too small to be measured accurately or too large for the volume of the calibration vessel. It is therefore advantageous if the predetermined time period can be calculated such that it bears some relation to the fluid flow rate which is expected. In the preferred embodiment, the signal which is supplied from the input 23, and which is indicative of the spray width, is used in this way. Of course, if a wider strip of land is to be sprayed, it is likely that a higher flow rate of fluid will be required, and so, in the preferred embodiment, the predetermined time which is used as the duration of the test is generally decreased with increasing desired spray widths. However, it is considered advantageous for this decrease not to be exactly inversely proportional, because otherwise an increased spraying width (implying increased flow rate) would result in a smaller volume being received in the calibration vessel during a calibration test. This would seem strange to the operator. Consequently, it is preferred to adjust the predetermined time period such that, in general, higher flow rates do give greater volumes of liquid during the calibration test. Thus, for example, if the desired spray width, and hence the desired fluid flow rate, is increased by a factor of 4, the duration of the calibration test may be reduced by a factor of 2.

An alternative approach is to select the predetermined time on the basis of the desired flow rate, such that, for every desired flow rate, an equal quantity of fluid should flow during the calibration test.

When the predetermined time is nearing its end, audible signals are emitted, by means of signals supplied to the output 28. The audible signals may take the form of two short tones, respectively two seconds and one second before the end of the predetermined time, and a long tone emitted as the predetermined time runs out. This is the signal for the operator to release the trigger and hence stop the test.

Alternatively, the signal supplied from the control circuit 21 to the output 28 may be adapted to be supplied to a valve, and hence to terminate the flow of fluid automatically after the expiry of the predetermined time.

When the calibration test has ended, the quantity of fluid delivered during the predetermined time is measured, and is compared with a quantity corresponding to the quantity which would have flowed if the actual flow rate had been equal to the desired flow rate. If these quantities are different, the valve on the head 8 can be manually adjusted, and a further calibration test can be carried out, in order to ensure that the actual flow rate is as close as possible to the desired flow rate. Once the flow rate has been set, by adjustment of the valve, the rotary switch 27 is set to the desired pedestrian speed which the operator intends to maintain during fluid delivery. Then, when a signal from the input 24 is supplied to the circuit 21, regular audible outputs are provided in order to make it easier for the operator to maintain the desired pedestrian speed, as is described in EP-A-0256744.

Thus, the equipment according to the present invention makes it easier for the calibration test to be carried out accurately by the operator, without requiring the use of additional input controls or complicated additional circuitry.

Once the calibration test is completed, the equipment is set into an operation mode. In a first operation mode, when the trigger 3 is depressed fluid begins to flow, and it continues to do so until the trigger is released. A second operation mode is intended to allow spraying around obstructions, such as trees, in the area to be sprayed. When such an obstruction is reached, the rotary switch 27 is used to set the equipment into the second operation mode. The inputs 23, 24 are then used to supply an input indicative of the size of the obstruction. For ease of operation, the user may perhaps be given a choice of three sizes, such as small, medium and large. It is also preferable to allow the user to indicate the required dose of the fluid which is being sprayed; however, the equipment may be pre-programmed with a dose rate which is close to the average for a herbicide, assuming a relatively high infestation rate, as is likely to be the case around the base of a tree.

When the trigger 3 is then depressed, fluid flows through the handset 2 to the delivery head 3 at a rate dependent upon the dose rate for a predetermined period of time dependent upon the size of the obstruction. When the predetermined period of time expires, a control signal is sent to the output 28 at which an audible output is provided, indicating that spraying should stop. For greater accuracy, four equally spaced audible tones may be provided, such that the user knows that one quarter of the circumference of the obstacle needs to be sprayed before the first tone, one quarter between the first and second tones, and so on.

This feature may also be included in spraying equipment in which the fluid is supplied from a pump. In such equipment, the control signal at the end of the predetermined time period may instead be supplied to the pump to cut off the supply automatically. In such equipment, the three audible tones to mark the ends of the first three quarters of the period may still be supplied.

Thus, the equipment allows the user to spray around obstacles such as trees without loss of accuracy of the dose rate supplied.

## Claims

1. Fluid delivery equipment being selectively operable in fluid delivery and calibration modes, the equipment including electronic circuitry (21), means supplying to a first input (23) of said electronic circuitry an input signal indicative of the desired width of a strip of land to which fluid is to be delivered, means supplying to a second input (24) of said electronic circuitry a signal indicating that fluid has been caused to flow in the equipment, and means (25,26) enabling the setting of the circuitry into a calibration mode of operation wherein an output signal arranged either (a) to operate an alarm to indicate to an operator to terminate fluid delivery or (b) to automatically terminate delivery, is provided a predetermined time after a signal is received at the second input, and wherein the predetermined time is calculated on the basis of the input signal received at the first input.

2. Fluid delivery equipment according to claim 1, wherein the output signal takes the form of an audible warning to the operator to indicate that the flow of fluid should be stopped.

3. Fluid delivery equipment according to claim 1, wherein the output signal takes the form of an electrical signal which automatically cuts off the fluid flow.

4. Fluid delivery equipment as claimed in one of claims 1 to 3, further comprising a handset (2), the handset having a trigger (3) whose operation allows fluid to flow, and the second input (24) of the circuitry being connected to receive a signal from a sensor detecting operation of the trigger.

5. Fluid delivery equipment according to claim 4, the handset being adapted for connection to a supply of the fluid and being connected to a distribution head by a tube through which the fluid can flow; the equipment being selectively operable in first and second fluid delivery modes and a calibration mode, wherein in the first operation mode, fluid is caused or allowed to flow to the distribution head for as long as the trigger is depressed and wherein, in the second operation mode, fluid is caused or allowed to flow to the distribution head for a predetermined operation time when the trigger is depressed and, at the end of the predetermined operation time, a control signal is output.

6. Equipment as claimed in claim 5, wherein the fluid can flow from the handset to the distribution head under gravity when the equipment is in an operating position, further comprising a manually operable variable flow restrictor for adjusting the rate at which fluid can be distributed, wherein the control signal is supplied to an audible output to provide an indication that delivery of fluid should be stopped.

7. Equipment as claimed in claim 5, further comprising an electrically controlled pump for supplying the fluid, wherein the control signal is supplied to the pump to cause the delivery of fluid from the pump to be stopped.

8. Equipment as claimed in claim 5, 6 or 7, wherein the control circuitry supplies a plurality of control signals to an audible output at regular intervals throughout the predetermined operation time.

9. A method of calibration of fluid delivery equipment in accordance with any preceding claim, the method comprising:
receiving an input signal indicative of the desired width of a strip of land to which fluid is to be delivered; and
automatically adjusting a duration of a calibration test on the basis of said input signal.

## Patentansprüche

1. Fluid-Ausbringgerät, wahlweise betreibbar in Fluidausbring- und in Eichbetriebsarten, wobei das Gerät enthält
eine elektronische Schaltung (21),
eine Vorrichtung, um in einen ersten Eingang (23) der elektronischen Schaltung ein Eingangssignal einzuspeisen, das die gewünschte Breite eines Geländestreifens anzeigt, auf dem Fluid auszubringen ist,
eine Vorrichtung, um in einen zweiten Eingang (24) der elektronischen Schaltung ein Signal einzuspeisen, das anzeigt, daß das Fluid veranlaßt wurde, in das Gerät zu fließen, und
Vorrichtungen (25, 26), die es ermöglichen, die Schaltung in eine Eichbetriebsart zu bringen, wobei ein Ausgangssignal bereitgestellt wird, das so gestaltet ist, daß es eine vorbestimmte Zeitspanne nach dem Empfang eines Signals am zweiten Eingang entweder (a) eine Alarmeinrichtung betätigt, um einem Bediener anzuzeigen, daß das Fluidausbringen zu beenden ist, oder (b) das Ausbringen automatisch beendet, wobei die vorbestimmte Zeitspanne ausgehend von dem am ersten Eingang empfangenen Eingangssignal berechnet wird.

2. Fluid-Ausbringgerät nach Anspruch 1, wobei das Ausgangssignal die Form einer hörbaren Warnung an den Bediener annimmt, um anzuzeigen, daß der Fluidfluß beendet werden sollte.

3. Fluid-Ausbringgerät nach Anspruch 1, wobei das Ausgangssignal die Form eines elektrischen Signals annimmt, das den Fluidfluß automatisch beendet.

4. Fluid-Ausbringgerät nach einem der Ansprüche 1 bis 3, ferner umfassend ein Handgerät (2), wobei
das Handgerät einen Schalter (3) aufweist, der bei Bedienung den Fluidfluß freigibt, und
der zweite Eingang (24) der Schaltung zum Empfangen eines Signals von einem Sensor angeschlossen ist, der das Bedienen des Schalters erkennt.

5. Fluid-Ausbringgerät nach Anspruch 4, wobei das Handgerät so angepaßt ist, daß es an einen Fluidvorrat angeschlossen werden kann und über ein Rohr mit einem Verteilerkopf verbunden ist, durch das das Fluid fließen kann, und das Gerät wahlweise in ersten und zweiten Fluidausbring-Betriebsarten und in einer Eichbetriebsart betreibbar ist, wobei in der ersten Betriebsart das Fluid veranlaßt bzw. ihm erlaubt wird, solange zum Verteilerkopf zu fließen, wie der Schalter gedrückt ist, und wobei in der zweiten Betriebsart das Fluid veranlaßt bzw. ihm erlaubt wird, für eine vorbestimmte Betriebszeit zum Verteilerkopf zu fließen, wenn der Schalter gedrückt ist, und am Ende der vorbestimmten Betriebszeit ein Steuersignal ausgegeben wird.

6. Gerät nach Anspruch 5, wobei das Fluid durch die Schwerkraft vom Handgerät zum Verteilerkopf fließen kann, wenn sich das Gerät in Betriebsstellung befindet, und das Gerät weiterhin einen handbedienbaren, veränderbaren Flußbegrenzer zum Einstellen der Fluidverteilrate umfaßt, wobei das Steuersignal einem hörbaren Ausgabesignal zugeführt wird, um anzuzeigen, daß das Ausbringen des Fluid beendet werden sollte.

7. Gerät nach Anspruch 5, zudem umfassend eine elektrisch gesteuerte, zum Zuführen des Fluids geeignete Pumpe, wobei das Steuersignal in die Pumpe eingegeben wird, um das Ausbringen des Fluids durch die Pumpe zu beenden.

8. Gerät nach Anspruch 5, 6 oder 7, wobei die Steuerschaltung in regelmäßigen Zeitabständen innerhalb einer vorbestimmten Betriebszeit eine Anzahl Steuersignale an ein hörbares Ausgabesignal anlegt.

9. Verfahren zum Eichen eines Fluid-Ausbringgeräts nach irgendeinem vorhergehenden Anspruch, wobei das Verfahren umfaßt
das Empfangen eines Eingangssignals, das die gewünschte Breite eines Geländestreifens anzeigt, auf dem Fluid auszubringen ist; und
das automatische Justieren der Zeitdauer einer Eichprüfung ausgehend vom Eingangssignal.

## Revendications

1. Equipement de distribution de fluide fonctionnant de façon sélective dans les modes de distribution de fluide et d'étalonnage, l'équipement comprenant un circuit électronique (21), un moyen fournissant à une première entrée (23) dudit circuit électronique un signal d'entrée indiquant la largeur souhaitée d'une bande de terre sur laquelle on doit distribuer le fluide, un moyen fournissant à une seconde entrée (24) dudit circuit électronique un signal indiquant que du fluide a été amené à s'écouler dans l'équipement, et un moyen (25, 26) permettant le réglage du circuit dans un mode de fonctionnement d'étalonnage dans lequel un signal de sortie prévu soit (a) pour actionner une alarme afin d'indiquer à un opérateur de terminer la distribution de fluide ou (b) de terminer automatiquement la distribution, est fourni à un temps prédéterminé après avoir reçu un signal à la seconde entrée, et dans lequel le temps prédéterminé est calculé sur la base du signal d'entrée reçu à la première entrée.

2. Equipement de distribution de fluide selon la revendication 1, dans lequel le signal de sortie prend la forme d'un avertissement audible pour l'opérateur afin d'indiquer que l'on doit arrêter l'écoulement de fluide.

3. Equipement de distribution de fluide selon la revendication 1, dans lequel le signal de sortie prend la forme d'un signal électrique qui coupe automatiquement l'écoulement de fluide.

4. Equipement de distribution de fluide comme revendiqué dans l'une quelconque des revendications 1 à 3, comprenant de plus une poignée de commande (2), la poignée de commande ayant une gâchette (3) dont le fonctionnement permet au fluide de s'écouler, et la seconde entrée (24) du circuit étant reliée pour recevoir un signal provenant d'un détecteur détectant l'actionnement de la gâchette.

5. Equipement de distribution de fluide selon la revendication 4, la poignée de commande étant adaptée pour une liaison à une alimentation de fluide et étant reliée à une tête de distribution par un tube à travers lequel le fluide peut s'écouler ; l'équipement fonctionnant de façon sélective dans de premier et second modes de distribution de fluide et dans un mode d'étalonnage, dans lequel dans le premier mode de fonctionnement, le fluide est amené ou peut s'écouler vers la tête de distribution tant que l'on appuie sur la gâchette et dans lequel dans le second mode de fonctionnement, le fluide est amené ou peut s'écouler vers la tête de distribution pendant un temps de fonctionnement prédéterminé lorsqu'on appuie sur la gâchette et, à la fin du temps de fonctionnement prédéterminé, un signal de commande est émis.

6. Equipement comme revendiqué à la revendication 5, dans lequel le fluide peut s'écouler de la poignée de commande vers la tête de distribution sous l'effet de la gravité lorsque l'équipement est dans une position de fonctionnement, comprenant de plus un restricteur d'écoulement à actionnement manuel pour régler le débit auquel on peut distribuer le fluide, dans lequel le signal de commande est fourni à une sortie audible pour indiquer que l'on doit arrêter la distribution de fluide.

7. Equipement comme revendiqué à la revendication 5, comprenant de plus une pompe commandée électriquement pour alimenter le fluide, dans lequel le signal de commande est fourni à la pompe pour amener la distribution de fluide à s'arrêter.

8. Equipement comme revendiqué à la revendication 5, 6 ou 7, dans lequel le circuit de commande fournit un ensemble de signaux de commande à une sortie audible à des intervalles réguliers pendant tout le temps de fonctionnement prédéterminé.

9. Un procédé d'étalonnage d'un équipement de distribution de fluide selon l'une quelconque des revendications précédentes, le procédé comprenant :
la réception d'un signal d'entrée indiquant la largeur souhaitée d'une bande de terre à laquelle le fluide doit être distribuer ; et
le réglage automatique d'une durée d'essai d'étalonnage sur la base dudit signal d'entrée.
